# EUROPEAN PATENT APPLICATION

(11) **EP 4 675 519 A1**
(43) Date of publication of application: **07.01.2026**
(21) Application number: 25186858.4
(22) Date of filing: 02.07.2025
(51) Int. Cl.: G06N 20/00, G01V 1/50

(54) **METHOD FOR ASSESSING THE SEISMIC RISK ON EXISTING BUILDINGS**

(30) Priority: 04.07.2024 IT 202400015397
(71) Applicant: M.T. Ricci S.r.l., 20123 Milano (MI) (IT)
(72) Inventor: RICCI, Leonardo, 40138 Bologna (IT); SENTINELLI, Sergio, 10137 Torino (IT)
(74) Representative: Mari, Marco Giovanni

(57) **Abstract**

The method for assessing the seismic risk for existing buildings introduces an integrated and codified flow of work steps through a mixed qualitative-quantitative assessment with the combination of the expeditious method with the scientific method, performed on a strategic subset of the population, an operational and targeted use of artificial intelligence with the use of supervised machine learning models, validated on an empirical basis, with APS (accuracy, precision, sensitivity) metrics calculated on a verification sample, with a significant reduction in time with the application of the validated model to a remaining subset S' (67-75% of the building heritage) without the need for a complete engineering assessment, offering a modular structure which may be adapted to different territorial and typological contexts, with the selection of the most relevant variables (P1/P'1, P4/P'4, P6/P'6, P7/P'7) performed through the ANOVA statistical analysis and the Chi-Square analysis, also thanks to a systemic approach with the definition of a clear, replicable operational flow, scalable and provided with objective validation criteria.

## Description

### Technical field of application

The present invention is addressed to the construction sector and relates to a method for assessing the seismic risk on existing buildings.

### Prior art

Seismic risk, determined by the combination of hazard P, vulnerability V and exposure E, is the measure of the damage expected in a given time interval, based on the type of seismicity, resistance of the buildings and use/occupation of the building in question according to the expression R=P x V x E.

Danger indicates the frequency and strength with which earthquakes occur, and is a physical characteristic of the territory; vulnerability indicates the poor capacity or inability of a building to resist seismic actions: the more vulnerable a building is (due to typology, inadequate design, poor quality of materials and construction methods, poor maintenance), the greater the consequences in terms of damage. Exposure indicates the greater or lesser presence of goods/people exposed to risk, i.e. the possibility of suffering economic damage and the loss of human lives.

Evaluating the seismic risk of entire existing building heritages, owned and/or managed by private entities (public bodies, banks, insurance companies, railways, motorways, industries, etc.), allows us to understand the risks resulting from a seismic event, and to plan over time the use of economic resources to be allocated to interventions to reduce the same risk.

To date, two possible investigation methods aimed at evaluating the seismic risk of existing buildings are known and already applied, among others:
- a rapid analysis method consisting of a macroseismic approach and based on the contents of the European Macroseismic Scale (EMS98) integrated with the contents of the Habitability and Damage in Seismic Emergency (AeDES) sheets; seismic vulnerability is deduced from the synthetic analysis of the formal and construction features of the building; the assessment of the risk class is therefore based on qualitative criteria;
- a conventional analysis method, defined according to the "Guidelines for the classification of seismic risk of buildings" approved with decree no. 58 of 28 February 2017, and subsequent amendments and additions (decree no. 65 of 7 March 2017 and no. 24 of 9 January 2020 of the Ministry of Infrastructure and Transport), in which the assessment of seismic vulnerability and seismic risk is methodologically more complex and is based on quantitative analyses.

A correct strategy for reducing seismic risk, relating to large building assets, must necessarily pass through an initial rapid screening of the same assets, by applying basic qualitative analyses for the assessment of the seismic risk class. The expeditious assessment is appropriate because conventional methods are based on the performance of complex and laborious analyses and investigations. It is therefore absolutely useful that such complex and expensive analyses are appropriately addressed on the basis of the results resulting from an initial expeditious assessment.

Preliminary application of the expeditious method allows for the establishment of a priority scale (from maximum to minimum risk), thus enabling a more rational and effective use of resources for the subsequent targeted application of the conventional method.

However, the seismic risk assessment of a building with the above-mentioned methods, first expeditious and then conventional, although easily performed by specialized operators, is still an activity that requires a certain amount of time for data collection and analysis. The possibility of evaluating all the buildings present in a given territorial context or of a vast building heritage owned by an institution would require a very long time and teams of technicians working full time.

In recent years, a simplified method has been developed, aimed at replacing the conventional method: this simplified method consists in the application of the so-called "expert judgment method", defined and developed by the National Earthquake Defense Group (GNDT), and is based on a quantitative assessment of a plurality of parameters.

The methods based on expert judgement consist in assigning to each building a vulnerability index, that is, a number that is determined according to certain rules, on the basis of indicators that are no longer interpreted with typological meaning but as symptoms of a suitability or otherwise to resist seismic actions (for example, the efficiency of connections, the resistance of materials, morphological regularity).

The seismic vulnerability of each building is then expressed through a vulnerability index associated with each parameter whose sum allows the evaluated buildings to be ordered according to a conventional and relative scale.

Although this simplified method is actually easier and quicker to apply than the conventional method, there is still the need to examine with this method all the buildings belonging to entire building stocks, one by one, with inevitable long execution times.

From the document XP035456592 a method is known for determining a rapid estimate of the seismic vulnerability of buildings, using convenient and reliable building data, easily available at the regional level, instead of the information usually required by traditional methods.

The seismic vulnerability estimate is obtained using a dataset of existing buildings in Grenoble (France) with an EMS98 vulnerability classification and by means of two different data mining techniques - Association Rule Learning (ARL) and Support Vector Machine (SVM).

The input data are basic information available in national databases (census information) and data derived from the processing of satellite images and aerial photographs; the output data allow a vulnerability map to be produced at national level.

The method described in document XP035456592 is a macroscale method and is easily applicable in case of scarcity of information on the structural features and construction details of the building heritage. Furthermore, this method is applicable only when there is uniformity of features between buildings.

In summary, from document XP035456592 a method is known for determining a rapid estimate of the seismic vulnerability of buildings having the following features which represent an application limit:
- Data source: aggregated data from national censuses and satellite images;
- Type of analysis: statistical inference on basic descriptive attributes;
- Machine learning techniques: Support Vector Machine (SVM) and Association Rule Learning (ARL);
- Variable selection: no advanced statistical selection;
- Codified method steps: no standardized workflow;
- Validated accuracy: estimated accuracy of 62-71%;
- Application purpose: urban macroscopic mapping;
- Output data: EMS98 class inferred.

### Disclosure of the invention

The main object of the invention is therefore to define a method of seismic risk assessment on existing buildings which integrates traditional analyses with innovative technologies that apply artificial intelligence, to offer a more accurate and timely picture of the seismic risk of entire existing building heritage.

In more general terms, the invention also aims to provide for the creation of services aimed at developing maps of seismic vulnerability and seismic risk of specific territories or building heritage (schools, hospitals, important buildings, workplaces, etc.) according to the "Guidelines for the classification of seismic risk of buildings" approved with decree no. 58 of 28 February 2017, and subsequent amendments and additions (decree no. 65 of 7 March 2017 and no. 24 of 9 January 2020 of the Ministry of Infrastructure and Transport), through the assisted compilation, and on computer support, of a targeted questionnaire and the subsequent application of the assessment method according to the invention.

The objects are achieved with a method for assessing the seismic risk on existing buildings, characterized in that it comprises the following steps:
a) identifying a set N of existing buildings to assess;
b) acquiring for all existing buildings belonging to said set N qualitative data relating to the formal and construction features of said buildings;
c) processing said qualitative data with a rapid analysis method based on qualitative criteria to assess the seismic vulnerability, and the related basic seismic risk, of all existing buildings belonging to said set N;
d) selecting in an organized manner a subset S comprising 25% to 33% of existing buildings of said set N;
e) acquiring for all existing buildings belonging to said subset S a plurality of analytical parameters;
f) processing said plurality of analytical parameters with a scientific analysis method based on quantitative criteria to assess the seismic vulnerability, and the related basic seismic risk, of all existing buildings belonging to said subset S;
g) selecting in an organized manner a learning sample A comprising 70% to 80% of existing buildings of said subset S, and deriving by subtraction a verification sample V comprising 20% to 30% of existing buildings of said subset S;
h) using an Al-based machine learning model entering into an algorithm, for each existing building included in said learning sample A, at least a part of said plurality of analytical parameters and the corresponding seismic vulnerability and basic seismic risk results already obtained with the scientific analysis method referred to in step f), to generate a statistical model for predicting seismic vulnerability and basic seismic risk universally applicable to any existing building in the set N;
i) applying said statistical prediction model to the existing buildings included in said verification sample V using as input data the same part of said plurality of analytical parameters used for learning sample A, and obtaining as output data calculated values of seismic vulnerability and basic seismic risk;
l) comparing said values calculated as output from said statistical prediction model referred to in step i) with the corresponding values of seismic vulnerability and basic seismic risk obtained by applying the scientific analysis method referred to in step f), and determining a degree of accuracy, precision and sensitivity (APS) of the statistical prediction model;
m) if said degree of accuracy, precision and sensitivity (APS) has a value greater than a pre-established value, applying the same validated statistical prediction model to the remaining part of the existing buildings belonging to the set N on which the scientific analysis method has not been applied;
n) if said degree of accuracy, precision and sensitivity (APS) has a value lower than said pre-established value, increasing the number of existing buildings belonging to the subset S and reiterating steps e) to l) until the statistical prediction model is validated.

Further aspects of the seismic risk assessment method according to the invention are described in the dependent claims.

The assessment method of the invention through the use of a machine learning model based on artificial intelligence offers the main advantage of significantly reducing both the time and costs related to the assessment of seismic risk on existing buildings belonging to the same municipality or body, or territorial context or building heritage.

The assessment method according to the invention identifies the seismic risk with a probabilistic approach based on the data on hazard, seismic vulnerability and structural typology of the buildings.

Through a machine learning model based on artificial intelligence, a statistical prediction model is obtained with which it is possible to explode the analysis to much larger volumes of data, and therefore to a much greater number of buildings, on which to plan more efficient and targeted maintenance interventions than traditional seismic risk assessment methods allow.

A further important advantage, especially for large real estate assets of public or private entities or companies, derives from a rational use of resources to be allocated for adaptation projects or interventions for the reduction of one or more classes of seismic risk.

Furthermore, thanks to the machine learning model, it is possible to work on a larger number of variables without having to have all of them available as input data or without having to previously map them in case those variables were missing.

### Brief description of the drawings

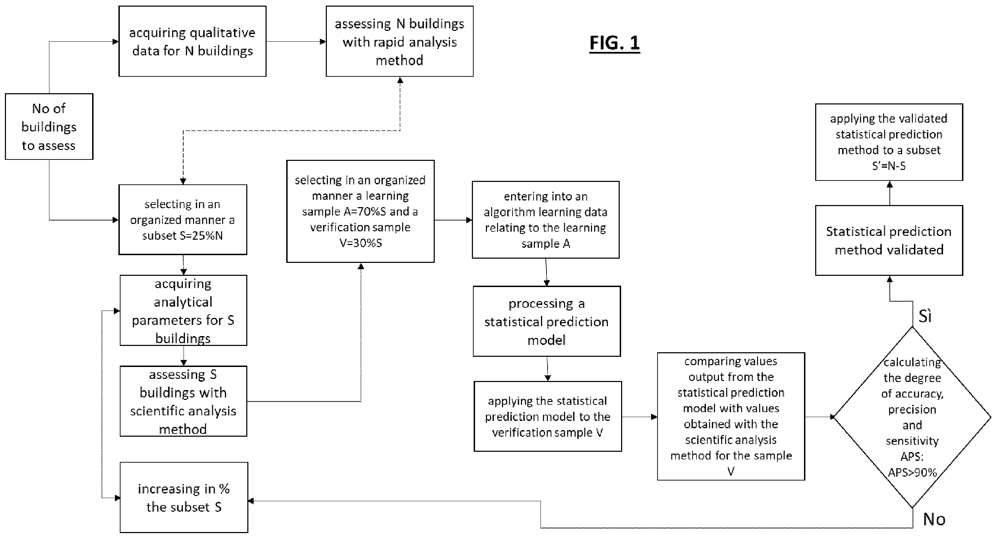

The advantages of the invention will become more apparent hereinafter, where a preferred method of implementation is described, by way of non-limiting example, and with the aid of Figure 1 which illustrates, schematically by means of a flowchart, the execution steps of a method for assessing the seismic risk on existing buildings according to the invention.

### Detailed description of a preferred embodiment of the invention

With reference to the flowchart in Figure 1, a method for assessing the seismic risk on existing buildings belonging to a set N of existing buildings to be assessed, for example part of a real estate portfolio or a territory, is illustrated.

A first step consists in acquiring for all existing buildings belonging to said set N qualitative data relating to the formal and construction features of said buildings.

These qualitative data are selected from data relating to:
- masonry (type I masonry with irregular texture and poor quality; type II masonry with regular texture and good quality; presence of isolated pillars; presence of mixed structure typology; reinforced masonry, etc.);
- horizontal elements, if identified (vaults without chains, vaults with chains, beams with deformable slab, beams with semi-rigid slab, beams with rigid slab, etc.);
- reinforced concrete structures (regularity in plan and elevation, presence and type of infill, etc.);
- roofing assessed on the weight factor and on the possible pushing effect on the perimeter support/constraint structures (heavy pushing, non-heavy pushing, light pushing, light non-pushing);
- terrain morphology and foundation failures;
- current status relating to pre-existing damage to structural and non-structural elements (light damage, medium-serious damage, very serious damage).

The next step consists in processing said qualitative data with a rapid analysis method based on qualitative criteria to assess the seismic vulnerability, and the related basic seismic risk, of all existing buildings belonging to said set N.

Said rapid analysis method is based on the European Macroseismic Scale (EMS9) integrated with the contents of the Habitability and Damage in Seismic Emergency (AeDES) sheets.

To apply this rapid analysis method, it is necessary to enter, within dedicated tables, the individual qualitative data requested and acquired, for example, during an inspection. By processing said qualitative data, the numerical values of each analysed component, forming part of the data under examination, are defined through calculations and logical functions with specific formulas. From this processing, a corresponding seismic vulnerability class is assigned to each qualitative data; the sum of all seismic vulnerability classes defines the vulnerability of the building. This value multiplied by the seismic hazard of the site defines the so-called "basic seismic risk "R' = P x V" and from this the seismic risk class is deduced.

A subsequent step consists in selecting in an organised manner a subset S comprising between 25% and 33% of existing buildings of said set N; the selection occurs on the basis of a statistical principle of the "random sample" to avoid any type of distortion caused by prejudice.

The term "random sample" is a technical statistical term that describes a sample which ensures that all classes and types of buildings are included in the sample. This requirement is achieved by previously evaluating all buildings using the expeditious method and by selecting a balanced sample for subsequent more in-depth assessment using a scientific analysis method. Subset S therefore includes all types of buildings and risk classes found through the application of the expeditious method.

For all existing buildings belonging to said subset S it is necessary to acquire a plurality of analytical parameters.

These analytical parameters are parameters partly detected in the field through inspection and partly obtained statistically.

The analytical parameters vary in part depending on whether the buildings are masonry buildings, have aggregates, or are reinforced concrete buildings.

For masonry buildings, these analytical parameters include:
- type and organization of the resistant system P1: evaluates the degree of organization of the vertical elements, regardless of the material and features of the individual walls; the significant element is the presence and effectiveness of the connections between orthogonal walls, such as to ensure the efficiency of the box-like behaviour of the structure;
- quality of the resistant system P2: evaluates the type of material and the shape of the elements constituting the walls, the homogeneity of material and size throughout the extension of the wall;
- conventional resistance P3: in relation to a verification plane, it evaluates the number of floors starting from the verification plane (included), the average covered area above the verification plane, the total area of the resistant elements in two orthogonal directions;
- position of the building and foundation P4: with a visual investigation the consistency of the ground, the % slope of the ground, any foundations at different heights, unbalanced thrusts of embankments are evaluated;
- horizontal elements P5: evaluates the slab operation and high stiffness for deformations in its plane, the effective connection to the resistant vertical elements;
- planimetric configuration P6: evaluates the shape in plan, and for rectangular buildings the ratio between the dimensions of the smaller side and the larger side is significant;
- elevation configuration P7: evaluate the presence of porches, loggias and attics, towers or turrets;
- maximum distance between walls P8: evaluates the presence of load-bearing walls intersected by transverse walls placed at an excessive distance from each other;
- roofing P9: evaluates the worst type of roofing present (pushing, "not very pushing", non-pushing), the presence or absence of attic curbs, the presence or absence of chains, the permanent load of the roofing, the support length of the roofing;
- non-structural elements P10: evaluate fixtures, appendages and projections which may cause damage to people or things if they fall;
- actual state P11, i.e. their state of conservation.

For buildings in aggregate, these analytical parameters further include:
- height interactions P12;
- plan interactions P13;
- presence of staggered floors between the building and adjacent buildings P14;
- typological and structural discontinuities P15;
- % difference in holes in facade P16.

For reinforced concrete buildings, these analytical parameters include:
- type and organization of the resistant system P'1 which evaluates the resistance offered by the individual resistant elements in the direction identified as the worst, and classifies the structure as a rigid-resistant structure, a rigid-fragile/deformable-resistant structure, a rigid-fragile/deformable-weak structure;
- quality of the resistant system P'2 which evaluates the type and quality of the materials used, execution features of the work, design features of the work;
- conventional resistance P'3 which takes into account a sort of degree of safety with respect to reference seismic forces;
- position of the building and foundation P'4 which evaluates the existence or not of foundations and their typology, features of the land;
- horizontal elements P5 which evaluates the slab operation and high stiffness for deformations in its plane, the effective connection to the resistant vertical elements;
- planimetric configuration P'6 which evaluates the distribution of masses and stiffness, and the plan shape;
- elevation configuration P'7;
- connections and critical elements P'8, where connections are defined as the connection areas between the structural elements (beam-column nodes, beam-floor union areas, foundation-column or wall nodes, joints between the structural elements if prefabricated), while all those of primary importance for the resistance to seismic actions are defined as critical elements;
- elements with low ductility P'9 which takes into account cases in which the behaviour of the building or parts of it is made critical by fragile elements, and/or significantly rigid and relatively little ductile;
- non-structural elements P'10, i.e. elements which may fall outside (infill walls, cornices, chimneys, parapets), and elements which may only fall inside (partition walls, furniture, objects hanging from the ceiling or partition walls);
- actual state P'11 which evaluates the integrity of the resisting elements in elevation (pillars, walls, infills, beams, floors), of the resisting elements in the foundation, and of the non-structural elements.

The next step consists in processing said plurality of analytical parameters with a scientific analysis method based on quantitative criteria to assess the seismic vulnerability, and the related basic seismic risk, of all existing buildings belonging to said subset S.

This scientific analysis method is based on the so-called "expert judgment method", defined and developed by the National Earthquake Defense Group (GNDT).

Even for the application of the scientific analysis method, it is necessary to enter, in dedicated tables, the individual parameters required, acquired for example during an inspection, or partly obtained statistically.

By processing said parameters, the numerical values of each analysed component, forming part of the parameter under examination, are defined through calculations and logical functions with specific formulas. From this analysis, each parameter is assigned the corresponding vulnerability class; the sum of these vulnerability classes defines the vulnerability of the building. Once again, this value multiplied by the seismic hazard of the site defines the so-called basic seismic risk "R' = P x V" and from this the seismic risk class is deduced.

Advantageously, an original variation consisted in replacing the vulnerability classes with the numerical values as defined by the "expert judgments" method, and the seismic zones with the maximum values of the corresponding maximum ground acceleration values, correlated to the hazard, so as to have numerical intervals through which to define the seismic risk classes.

As mentioned above, the scientific analysis method is performed on a subset S, comprising between 25% and 33% of the buildings belonging to the starting set N.

The next step of the assessment method according to the invention consists in the creation of a statistical prediction model with which to evaluate the remaining buildings belonging to the set N and not evaluated with the scientific analysis method.

For this purpose, the method according to the invention provides for the use of a machine learning model based on artificial intelligence.

Specifically, said machine learning model is supervised learning.

Supervised learning consists of 2 steps:
- a learning step (called "training"), in which the algorithm is trained by providing it with a series of input data for which the response is already known (output data); in the learning step a function, a statistical model, is interpolated, which links the independent variable to the dependent one;
- a testing and verification step (called "prediction"), in which, based on the data learned in the learning step, the algorithm is able to generate predictions; the statistical model learned in the learning step is generalized, and the algorithm can apply the learned statistical model to new input data.

With supervised learning, models are trained to recognize and map input data to specific predefined classes.

Classification analysis appears to be the most suitable supervised learning for the application in question: classification algorithms in fact predict a result expressed as a discrete value, which indicates the belonging of the object to a specific class (in this case the seismic vulnerability class).

Since the parameters used to calculate vulnerability may only assume discrete values corresponding to classes A, B, C, D..., the classification algorithm that seems to be most suitable is a so-called decision tree algorithm.

To proceed with the creation of a statistical prediction model, it is therefore necessary to select in an organized manner a learning sample A comprising 70% to 80% of existing buildings of said subset S, and deriving by subtraction a verification sample V comprising 20% to 30% of said subset S.

Again, the learning sample A is selected to ensure that all classes and building types are included within it.

Using an Al-based machine learning model as described above and entering into an algorithm, for each existing building included in said learning sample A, a series of learning data comprising at least a part of said plurality of analytical parameters and the corresponding seismic vulnerability and basic seismic risk results already obtained with the scientific analysis method referred to in step f), to generate a statistical model for predicting seismic vulnerability and basic seismic risk universally applicable to any existing building in the set N.

These analytical parameters, which are entered as input data to the algorithm, are partly parameters detectable in the field, and partly parameters obtainable by interference, through Chi-Square analysis, if they may not be obtained in a deterministic manner.

The most significant parameters are defined by the ANOVA statistical analysis and are those that have a greater impact on the variance of the result, i.e. the seismic vulnerability and the basic seismic risk, and are in order P1/P'1, P4/P'4, P6/P'6 and P7/P'7, from which, in the face of the Chi-square analysis, P2/P'2, P8/P'8 and P11/P'11 are correlated.

To generate the statistical prediction model, only the most significant parameters are extrapolated in order to drastically reduce all the data collection work. Advantageously, the parameters P1/P'1, P4/P'4, P6/P'6 and P7/P'7 are evaluated on site, which are the parameters that best and most consistently describe the variance of vulnerability, while the values of the parameters P2/P'2, P8/P'8 and P11/P'11 are determined statistically-probabilistically in order to be able to feed the algorithm with a greater number of values; the choice of the parameters P3/P'3, P5/P'5, P9/P'9 and P10/P'10 is instead the result of consolidated experience in the field of civil engineering.

The statistical prediction model learned in the learning step is then generalized and may be applied to the existing buildings included in said verification sample V using as input data the same part of said plurality of analytical parameters used for learning sample A, and obtaining as output data calculated values of seismic vulnerability and basic seismic risk.

The quality of the results obtained from the application of the statistical prediction model is evaluated through a so-called confusion matrix.

Said confusion matrix is obtained by comparing the values calculated as output from the statistical prediction model with the corresponding values of seismic vulnerability and basic seismic risk obtained by applying the scientific analysis method.

From the matrix, three metrics are obtained with which to evaluate the reliability of the results and determine a degree of accuracy, precision and sensitivity APS of the statistical prediction model.

If said degree of accuracy, precision and sensitivity (APS) has a value greater than a pre-established value, for example between 80% and 90%, the statistical prediction model is considered validated, and it is possible to apply the same validated model to the remaining part of the existing buildings belonging to the set N (i.e. a subset S' comprising between 67% and 75% of the existing buildings of said set N) on which the scientific analysis method has not been applied but only the expeditious analysis method.

If said accuracy, precision and sensitivity (APS) is less than said target value, it is necessary to increase the number of existing buildings belonging to the subset S to enrich the Al-based machine learning model.

The assessment method according to the invention introduces an integrated and codified flow of work steps (steps a-n) which allows:
- a mixed qualitative-quantitative evaluation combining the expeditious method (steps a-c) with the scientific method (steps e-f), performed on a strategic subset of the population (step d);
- use of artificial intelligence in an operational and targeted manner with the use of supervised machine learning models, validated on an empirical basis, with APS (accuracy, precision, sensitivity) metrics calculated on a verification sample (steps g-l);
- significant reduction in time with the application of the validated model to the remaining subset S' (67-75% of the building heritage) without the need for a complete engineering assessment (step m);
- modular structure adaptable to different territorial and typological contexts, with the selection of the most relevant variables (P1/P'1, P4/P'4, P6/P'6, P7/P'7) performed through the ANOVA statistical analysis and the Chi-Square analysis;
- systemic approach with the definition of a clear, replicable, scalable operational flow provided with objective validation criteria.

The model becomes more accurate as the volume of data that may be used for training increases. With a significant increase in the data volume, the same analyses shown will be performed in more detail in order to determine the capacity, robustness and limits of the statistical prediction model having available different quantitatively and qualitatively different combinations of input data.

As already reiterated several times, the seismic risk assessment method according to the invention, thanks to the application of a machine learning model based on artificial intelligence, allows a large-scale and timely analysis and assessment of the seismic vulnerability and therefore of the seismic risk class of each individual building. The speeding up of the entire assessment work is the added value brought by the method according to the invention.

In summary, and wanting to make a quick comparison with the method for determining a rapid estimate of the seismic vulnerability of buildings known from the document XP035456592, the assessment method according to the invention has the following features:
- Data source: sample certified by technical survey on each building;
- Type of analysis: rapid analysis method + scientific analysis method on subset, followed by application of a statistical prediction model;
- Machine learning techniques: supervised learning - Decision Tree;
- Selection of variables: statistical selection with ANOVA and Chi-Square analysis;
- Codified method steps: 13 work steps (steps a-n);
- Validated accuracy: APS calculation > 80-90% with confusion matrix;
- Application purpose: assessment of each individual building, even on a large scale and also for situations of buildings with heterogeneous features;
- Output data: risk class with predictive numeric values.

As an example, a simulation is reported regarding the execution times of an assessment of the seismic vulnerability of the building heritage of municipalities in the Campi Flegrei area, through the application of standard assessment methodologies and the application of the assessment method according to the invention.

The "intervention area" was identified in the areas of the municipalities of Pozzuoli, Bacoli and Naples (Bagnoli district and part of the municipality of Soccavo/Pianura and Posillipo) most affected by the bradyseismic phenomenon and therefore by seismicity and ground deformations. The "intervention area" was identified on the basis of the location of the epicentres of seismic events with a magnitude of duration greater than or equal to 2, which occurred in the Phlegraean area starting from 1983; of uplifts equal to or greater than 10 cm since 2015 (corresponding to approximately 20 cm since 2006).

The "intervention area" includes a total population of 84,961 people and an overall (estimated) number of residential buildings equal to 15,516.

Assuming:
- estimated average time for analysis with conventional method: 14 days/building;
- estimated average time for analysis with simplified method: 2 days/building;
- estimated average time for completing the information questionnaire on qualitative data relating to formal and construction features of buildings to be used for the application of the rapid analysis method: 5 buildings/day.

The tables below compare the times to have an assessment on all the buildings in the "intervention area" by applying the conventional method, the simplified method and the assessment method object of the invention (which is composed of a rapid analysis method applied to 100% of the buildings, a scientific analysis method applied to 25% of the buildings, and then entrusts the assessment of the remaining 75% of the buildings to a machine learning model based on artificial intelligence).

| | Conventional method | | Simplified method | |
|---|---|---|---|---|
| Number of buildings N | n. days for a technician | n. days for 50 technicians | n. days for a technician | n. days for 50 technicians |
| 15,516 | 217,224 d | 4,344 d | 31,032 d | 621 d |
| | | 11.90 years | | 2 years |

| | Method subject of invention | | |
|---|---|---|---|
| N. of buildings | n. days for a technician | n. days for 50 technicians | |
| N = 15,516 | 3103 d | 62 d | Expeditious analysis method |
| S= 25%N =3879 | 7758 d | 155 d | Scientific analysis method |
| | | 217 d = 7 months | |

It is clear that the assessment method according to the invention allows a timely analysis and assessment of the seismic vulnerability, and therefore of the seismic risk class, of each individual building in the "area of interest".

## Claims

1. Method for assessing the seismic risk on existing buildings, **characterized in that** it comprises the following steps:
a) identifying a set (N) of existing buildings to assess;
b) acquiring for all existing buildings belonging to said set (N) qualitative data relating to the formal and construction features of said buildings;
c) processing said qualitative data with a rapid analysis method based on qualitative criteria to assess the seismic vulnerability, and the related basic seismic risk, of all existing buildings belonging to said set (N);
d) selecting in an organized manner a subset (S) comprising 25% to 33% of existing buildings of said set (N);
e) acquiring for all existing buildings belonging to said subset (S) a plurality of analytical parameters;
f) processing said plurality of analytical parameters with a scientific analysis method based on quantitative criteria to assess the seismic vulnerability, and the related basic seismic risk, of all existing buildings belonging to said subset (S);
g) selecting in an organized manner a learning sample (A) comprising 70% to 80% of existing buildings of said subset (S), and deriving by subtraction a verification sample (V) comprising 20% to 30% of existing buildings of said subset (S);
h) using an Al-based machine learning model entering into an algorithm, for each existing building included in said learning sample (A), at least a part of said plurality of analytical parameters and the corresponding seismic vulnerability and basic seismic risk results already obtained with the scientific analysis method referred to in step f), to generate a statistical model for predicting seismic vulnerability and basic seismic risk universally applicable to any existing building in the set (N);
i) applying said statistical prediction model to the existing buildings included in said verification sample (V) using as input data the same part of said plurality of analytical parameters used for learning sample (A), and obtaining as output data calculated values of seismic vulnerability and basic seismic risk;
l) comparing said values calculated as output from said statistical prediction model referred to in step i) with the corresponding values of seismic vulnerability and basic seismic risk obtained by applying the scientific analysis method referred to in step f), and determining a degree of accuracy, precision and sensitivity of the statistical prediction model;
m) if said degree of accuracy, precision and sensitivity has a value greater than a pre-established value, applying the same validated statistical prediction model to the remaining part of the existing buildings belonging to the set N on which the scientific analysis method has not been applied;
n) if said degree of accuracy, precision and sensitivity has a value lower than said pre-established value, increasing the number of existing buildings belonging to the subset (S) and reiterating steps e) to l) until the statistical prediction model is validated.

2. Assessment method according to claim 1, **characterized in that** said qualitative data are selected from data relating to walls, horizontal elements, reinforced concrete structures, roofs, morphology of the ground and foundation failures, current state relating to pre-existing damage to structural and non-structural elements.

3. Assessment method according to claim 1, **characterized in that** said rapid analysis method is based on the European Macroseismic Scale integrated with the contents of the Habitability and Damage in Seismic Emergency sheets.

4. Assessment method according to claim 1, **characterized in that**, for masonry buildings, said analytical parameters include: type and organization of the resistant system, quality of the resistant system, conventional resistance, position of the building and foundation, horizontal elements, planimetric configuration, elevation configuration, maximum distance between walls, roofing, non-structural elements, current state.

5. Assessment method according to claim 4, **characterized in that**, for aggregate buildings, said analytical parameters further comprise: interactions in height, interactions in plan, presence of staggered floors between the building and adjacent buildings, typological and structural discontinuities, % difference in holes in the facade.

6. Assessment method according to claim 1, **characterized in that**, for reinforced concrete buildings, said analytical parameters include: type and organization of the resistant system, quality of the resistant system, conventional resistance, position of the building and foundation, horizontal elements, planimetric configuration, elevation configuration, connections and critical elements, elements with low ductility, non-structural elements, current state.

7. Assessment method according to claim 1, **characterized in that** said part of analytical parameters to be entered in said algorithm for the learning sample (A) includes parameters detectable on the field and parameters obtained by interference using *Chi-Squared* analysis.

8. Assessment method according to claim 1, **characterized in that** said scientific analysis method is based on the so-called "expert judgement method".

9. Assessment method according to claim 1, **characterized in that** said machine learning model is supervised learning.

10. Assessment method according to claim 9, **characterized in that** said supervised learning includes a classification algorithm.

11. Assessment method according to claim 10, **characterized in that** said classification algorithm is a decision tree algorithm.

12. Assessment method according to claim 1, **characterized in that** said degree of accuracy, precision and sensitivity is obtained by applying a confusion matrix.

13. Assessment method according to claim 1, **characterized in that** said predetermined value of the degree of accuracy, precision and sensitivity is equal to 90%.
